# EUROPÄISCHE PATENTSCHRIFT

(11) **EP 2 659 136 B1**
(45) Veröffentlichungstag und Bekanntmachung des Hinweises auf die Patenterteilung: **30.05.2018**
(21) Anmeldenummer: 11805047.5
(22) Anmeldetag: 23.12.2011
(51) Int. Cl.: H02P 9/10, F03D 9/25, F03D 7/04, F03D 7/02

(54) **WINDPARK UND VERFAHREN ZUM BETREIBEN EINES WINDPARKS**
WIND FARM AND METHOD FOR OPERATING A WIND FARM
PARC ÉOLIEN ET PROCÉDÉ PERMETTANT D'EXPLOITER UN PARC ÉOLIEN

(30) Priorität: 29.12.2010 DE 102010056458
(43) Veröffentlichungstag der Anmeldung: 06.11.2013
(73) Patentinhaber: Senvion GmbH, 22297 Hamburg (DE)
(72) Erfinder: MATZEN, Björn, 24855 Bollingstedt (DE)
(74) Vertreter: Glawe, Delfs, Moll
(86) Internationale Anmeldenummer: PCT/EP2011/074025
(87) Internationale Veröffentlichungsnummer: WO 2012/089698

(56) Entgegenhaltungen:
- EP-A1- 2 166 225
- EP-A1- 2 236 821
- EP-A2- 1 752 659

## Beschreibung

Die Erfindung betrifft ein Verfahren zum Betreiben eines Windparks, sowie einen Windpark. Bei dem Windpark kann es sich insbesondere um einen Offshore-Windpark handeln.

Windparks umfassen mehrere Windenergieanlagen, wobei die in den Windenergieanlagen erzeugte Leistung zunächst in ein windparkinternes Netz eingespeist wird. An einer Übergabestation wird die Leistung aus dem windparkinternen Netz in ein externes Versorgungsnetz eingespeist. In der Regel handelt es sich bei dem windparkinternen Netz um ein Mittelspannungsnetz, während das externe Versorgungsnetz ein Hochspannungsnetz ist. An der Übergabestation ist dann ein Transformator vorgesehen, mit dem zwischen der Spannung vom Mittelspannungsnetz und der Spannung vom Hochspannungsnetz transformiert wird. Offshore-Windparks sind in der Regel über ein einziges Netzkabel mit dem Versorgungsnetz verbunden, wobei die Übergabestation und ggf. der Transformator auf einer zentralen Plattform des Windparks angeordnet sind.

Für den Betrieb einzelner Windenergieanlagen bzw. eines Windparks ist eine Energieversorgung notwendig, damit einzelne elektrische Komponenten der Windenergieanlagen bzw. des Windparks betrieben werden können. Zu diesen elektrischen Komponenten gehören u.a. Steuerungseinheiten, Antriebseinheiten für die Pitch- und/oder Azimutverstellung, sowie die Hindernisbefeuerung. Diese Energieversorgung wird in der Regel durch das Versorgungsnetz gewährleistet. Bricht die Energieversorgung über das Versorgungsnetz zusammen, kann auch der Betrieb der elektrischen Komponenten grundsätzlich nicht mehr gewährleistet werden. Davon sind auch für das Überleben und/oder Sicherheit der Windenergieanlagen notwendigen Komponenten, wie z.B. die Hindernisbefeuerung, betroffen.

Die Energieversorgung bricht bspw. bei Ausfall des Versorgungsnetzes, Netzkabelfehlern oder Schäden an der Übergabestation zusammen. Letztere Fälle sind besonders kritisch bei Offshore-Windparks, da diese teilweise nur über ein einzelnes Netzkabel und eine einzige Übergabestation mit dem Versorgungsnetz verbunden sind, deren Reparatur zeitaufwändig ist und teilweise mehrere Monate dauern kann.

Im Stand der Technik ist bekannt, an jeder Windenergieanlage eine unabhängige Spannungsversorgung (USV) vorzusehen, mit der einzelne Verbraucher der Windenergieanlagen auch bei Ausfall der Energieversorgung über das Versorgungsnetz betrieben werden können. Die USV gemäß dem Stand der Technik haben eine begrenzte Kapazität und können beispielsweise die elektrischen Komponenten einer Windenergieanlage für 24 Stunden mit Energie versorgen. Bei einem längeren Ausfall der Energieversorgung über das Versorgungsnetz müssen die USVs regelmäßig aufgeladen werden.

Für das Aufladen der USVs ist bekannt, an der Übergabestation ein zentrales Notstromaggregat vorzusehen. Die Aufladung der USVs kann dabei für alle oder lediglich einen Teil der Windenergieanlagen gleichzeitig erfolgen. Das Notstromaggregat muss auf jeden Fall so dimensioniert sein, dass zu keinem Zeitpunkt die in den USVs der einzelnen Windenergieanlagen gespeicherte Energie vollständig verbraucht ist und dann die elektrischen Komponenten der Windenergieanlagen nicht mehr betrieben werden können.

Als Notstromaggregat wird in der Regel ein handelsüblicher, mit Kraftstoff betriebener Generator eingesetzt, der an der Übergabestation des Windparks angeordnet ist. Insbesondere bei Offshore-Windparks ist der Platz für einen solchen Generator und dessen Treibstofftank (die bspw. auf einer zentralen Plattform des Windparks angeordnet sein können) begrenzt, weshalb der Kraftstofftank regelmäßig klein ausfällt. Dies hat zur Folge, dass häufig nachgetankt werden muss, was entfernungs- und witterungsbedingt bei Offshore-Anlagen schwierig ist. EP 2 166 225 A1 sowie EP 1 752 659 A2 offenbaren Windparks sowie entsprechende Verfahren zum Betreiben solcher. Ausgehend von dem eingangs genannten Stand der Technik liegt der Erfindung die Aufgabe zugrunde, ein Verfahren zum Betreiben eines Windparks sowie einen Windpark zu schaffen, bei denen die im Stand der Technik vorhandenen Nachteile nicht mehr oder nur noch im verringerten Maße auftreten. Diese Aufgabe wird gelöst durch ein Verfahren gemäß dem Hauptanspruch, sowie einen Windpark gemäß dem nebengeordneten Anspruch 10. Vorteilhafte Ausführungsformen ergeben sich aus den abhängigen Ansprüchen.
Demnach betrifft die Erfindung ein Verfahren zum Betreiben eines Windparks mit mehreren, an ein windparkinternes Netz angeschlossenen Windenergieanlagen mit jeweils einer Betriebsführungseinheit und weiteren Komponenten umfassend elektrische Verbraucher, und einer mit wenigstens einem Teil der elektrischen Komponenten der Windenergieanlagen verbundene Netzersatzversorgungseinheit, wobei die elektrischen Verbraucher jeder Windenergieanlage in wenigstens zwei Gruppen eingeteilt sind, wobei zumindest die Verbrauchswerte der elektrischen Verbraucher einer zweiten Gruppe in der Betriebsführungseinheit der jeweiligen Windenergieanlage hinterlegt sind, die elektrischen Verbraucher von der Betriebsführungseinheit der jeweiligen Windenergieanlage auf Anforderung zu- und abschaltbar sind, wobei die Betriebsführungseinheit einen Netzausfallmodus aufweist, bei dem aus einem Verbrauchsmaximalwert und dem Ist-Verbrauch der zugeschalteten elektrischen Verbraucher eine Leistungsreserve berechnet wird, die Betriebsführungseinheit einen elektrischen Verbraucher einer ersten Gruppe auf Anforderung zuschaltet und einen elektrischen Verbraucher der zweiten Gruppe auf Anforderung und bei einer Leistungsreserve größer gleich dem Verbrauchswert des angeforderten elektrischen Verbrauchers zuschaltet.

Weiter betrifft die Erfindung einen Windpark umfassend mehrere an ein windparkinternes Netz angeschlossene Windenergieanlagen mit jeweils einer Betriebsführungseinheit und weiteren Komponenten umfassend elektrische Verbraucher, und einer mit wenigstens einem Teil der elektrischen Komponenten der Windenergieanlagen verbundene Netzersatzversorgungseinheit, wobei die elektrischen Verbraucher jeder Windenergieanlage in wenigstens zwei Gruppen eingeteilt sind, wobei zumindest die Verbrauchswerte der elektrischen Verbraucher einer zweiten Gruppe in der Betriebsführungseinheit der jeweiligen Windenergieanlage hinterlegt sind, die elektrischen Verbraucher von der Betriebsführungseinheit der jeweiligen Windenergieanlage auf Anforderung zu- und abschaltbar sind, wobei die Betriebsführungseinheit einen Netzausfallmodus aufweist, bei dem aus einem Verbrauchsmaximalwert und dem Ist-Verbrauch der zugeschalteten elektrischen Verbraucher eine Leistungsreserve berechnet wird, die Betriebsführungseinheit einen elektrischen Verbraucher einer ersten Gruppe auf Anforderung zuschaltet und einen elektrischen Verbraucher der zweiten Gruppe auf Anforderung und bei einer Leistungsreserve größer gleich dem Verbrauchswert des angeforderten elektrischen Verbrauchers zuschaltet.

Zunächst seien einige im Rahmen der Erfindung verwendete Begriffe näher erläutert:
Mit Zu- und/oder Abschaltung "nach Anforderung" ist gemeint, dass ein entsprechender Verbraucher nur dann zugeschaltet wird, wenn er tatsächlich benötigt wird. Ein elektrischer Verbraucher kann auch wieder abgeschaltet werden, sobald er nicht mehr benötigt wird. Beispielsweise wird eine Pitchverstelleinheit oder deren Antrieb für die Verstellung des Anstellwinkels eines oder mehrerer Rotorblätter nur dann zugeschaltet, wenn dieser tatsächlich verändert werden soll. Nach erfolgter Verstellung des Anstellwinkels kann die Pitchverstelleinheit oder deren Antrieb wieder abgeschaltet werden. Im Gegensatz dazu ist bspw. bei der Betriebsführungseinheit, die ebenfalls einen elektrischen Verbraucher einer Windenergieanlage darstellt, ein dauerhafter Betrieb notwendig, so dass die Betriebsführungseinheit dauerhaft zugeschaltet bleiben muss.

Mit "Leistungsreserve" ist eine grundsätzlich zur Verfügung stehende elektrische Leistung bezeichnet, die nicht genutzt wird. Die Leistungsreserve ist die Differenz zwischen Leistungsbedarf und Leistungsangebot.

Mit "Verbrauchswert" eines elektrischen Verbrauchers ist der Wert der zu erwartenden Leistungsaufnahme des elektrischen Verbrauchers im Betrieb bezeichnet. Es kann sich dabei um die maximale Leistungsaufnahme eines elektrischen Verbrauchers handeln. Es ist aber auch möglich, dass ein elektrischer Verbraucher bei Netzausfall mit einer geringeren Leistungsaufnahme betrieben werden soll, die dann den Verbrauchswert bildet.

Während eines "Netzausfall" ist es im Allgemeinen nicht möglich, dass elektrische Leistung vom windparkinternen Netz in das Versorgungsnetz eingespeist wird. Ein Netzausfall tritt bspw. bei Zusammenbruch des Versorgungsnetzes oder technische Problemen in der Verbindung zwischen windparkinternem Netz und Versorgungsnetz auf. Vorrichtungen und Methoden zur Feststellung von Netzausfällen (bspw. Phasenwächter) sind im Stand der Technik bekannt.

Der Erfindung liegt die Erkenntnis zugrunde, dass durch ein intelligentes Verbrauchsmanagement, wie es durch das erfindungsgemäße Verfahren bzw. bei dem erfindungsgemäßen Windpark erreicht wird, der Betrieb eines Windparks bei einem Netzausfall verbessert werden kann.

Durch die Einteilung der elektrischen Verbraucher einer Windenergieanlage in wenigstens zwei Gruppen erfolgt eine Priorisierung der einzelnen elektrischen Verbraucher.

Die elektrischen Verbraucher einer ersten Gruppe sind für das Überleben und die Sicherheit der einzelnen Windenergieanlagen zwingend notwendig. Es muss daher immer ausreichend elektrische Leistung zur Verfügung stehen, um bei entsprechenden Anforderungen alle Verbraucher der ersten Gruppe betreiben zu können. Zu der ersten Gruppe können insbesondere alle Sicherheitsrelevanten Komponenten eine Windenergieanlage gehören, wie z.B. die Anlagensteuerung und Hinderniskennzeichnung (Flugbefeuerung und/oder Schifffahrtskennzeichnung). Auch Kommunikationseinrichtungen sowie meteorologische Messeinrichtungen oder Netzüberwachungseinrichtungen können der ersten Gruppe zugeordnet sein.

Die im Netzausfallmodus ggf. benötigten elektrischen Verbraucher einer zweiten Gruppe werden nur dann betrieben, wenn ausreichend Leistungsreserven zur Verfügung stehen. Solche Leistungsreserven können beispielsweise dann entstehen, wenn eine oder mehrere elektrische Verbraucher der ersten Gruppe abgeschaltet sind, da sie nicht benötigt werden, also keine Anforderung vorliegt. Sind bspw. die Stellmotoren zur Azimutverstellung der ersten Gruppe zugeordnet, so werden diese nur zugeschaltet, wenn tatsächlich eine Azimutverstellung erforderlich ist. In der übrigen Zeit sind die Stellmotoren zur Azimutverstellung abgeschaltet. Eine im Vergleich zum Betrieb unter Volllast deutlich geringere Leistungsaufnahme der elektrischen Komponenten ist im Zusammenhang mit dieser Erfindung einer Abschaltung gleichzusetzen. Die für die Stellmotoren zur Azimutverstellung im Falle eine Abschaltung nicht benötigte Leistung steht dann als Leistungsreserve zur Verfügung und kann von elektrischen Verbrauchern der zweiten Gruppe genutzt werden. Beispiele für Komponenten, die der zweiten Gruppe zugeordnet sein können, sind Entfeuchter oder Heizelemente, mit denen das Klima innerhalb der Gondel reguliert werden kann, sowie Pitchverstelleinheiten.

Die Netzersatzversorgungseinheit muss so dimensioniert sein, dass alle elektrischen Verbraucher der ersten Gruppe jeder Windenergieanlage - d.h. für das Überleben und die Sicherheit der Windenergieanlage absolut notwendigen Verbraucher - betrieben werden können. Die Netzersatzversorgungseinheit kann dabei jedoch kleiner dimensioniert werden als im Stand der Technik, bei dem kein erfindungsgemäßes intelligentes Verbrauchsmanagement mit priorisierendem Zu- und Abschaltung von elektrischen Verbrauchern vorhanden ist.

Aufgrund des erfindungsgemäßen intelligenten Verbrauchsmanagements sinkt gegenüber dem Stand der Technik der Gesamtenergieverbrauch bei Netzausfall, da nicht zwingend notwendige elektrische Verbraucher der zweiten Gruppe abgeschaltet werden. Handelt es sich bei der Netzersatzversorgungseinheit um einen mit Kraftstoff betriebenen Notstromgenerator, sinkt folglich auch der Kraftstoffverbrauch und es muss bei gleichbleibend großem Tank im Vergleich zum Stand der Technik seltener nachgetankt werden. Letzteres ist besonders relevant bei Offshore-Windparks, da der Betankungsvorgang entfernungs- und wetterbedingt kostenintensiv und unsicher ist.

Indem aufgrund des erfindungsgemäßen Verbrauchsmanagements weiterhin sichergestellt wird, dass die durch die elektrischen Verbraucher der einzelnen Windenergieanlagen im Windpark die maximale Leistung der Netzersatzversorgungseinheit nicht überschritten wird, d.h. zum Betrieb der elektrischen Verbraucher der ersten Gruppe immer ausreichende Leistung zur Verfügung steht, kann auf eine unabhängige Spannungsversorgung (USV) bei den einzelnen Windenergieanlagen verzichtet werden.

In der Betriebsführungseinheit ist ein Verbrauchsmaximalwert hinterlegt. Er gibt an, wie viel Energie die zugeschalteten elektrischen Verbraucher einer Windenergieanlage in der Summe verbrauchen dürfen und können. Der Verbrauchsmaximalwert ist dabei bevorzugt gleich oder größer als die Summe der Verbrauchswerte der elektrischen Verbraucher der ersten Gruppe, d.h. selbst bei Zuschaltung aller elektrischen Verbraucher der ersten Gruppe wird der Verbrauchsmaximalwert nicht überschritten. Der Verbrauchsmaximalwert kann fest in der Betriebsführungseinheit eingespeichert oder der Betriebsführungseinheit über eine Datenverbindung o.ä. übermittelt werden.

Die Betriebsführungseinheit wird weiterhin mit Informationen über den Ist-Verbrauch der elektrischen Verbraucher einer Windenergieanlage versorgt oder kann diese ermitteln. Der Ist-Verbrauch kann bspw. über eine dazu ausgebildete Messvorrichtung ermittelt werden. Es ist aber auch möglich, dass in der Betriebsführungseinheit Verbrauchswerte der elektrischen Verbraucher der ersten und zweiten Gruppe hinterlegt sind und die Betriebsführungseinheit die Verbrauchswerte aller zugeschalteten elektrischen Komponenten zum Ist-Verbrauch aufaddiert.

Aus der Differenz zwischen Verbrauchsmaximalwert und Ist-Verbrauch kann die Leistungsreserve bestimmt werden.

Besteht nun eine Anforderung, einen elektrischen Verbraucher der zweiten Gruppe zuzuschalten, wird von der Betriebsführungseinheit überprüft, ob die Leistungsreserve größer ist als der in der Betriebsführungseinheit hinterlegte Verbrauchswert des elektrischen Verbrauchers. Ist dies der Fall steht also genug Leistungsreserve für den Betrieb des elektrischen Verbrauchers der zweiten Gruppe zur Verfügung und dieser kann zugeschaltet werden. In dem Fall, dass die Leistungsreserve geringer ist als der Verbrauchswert des elektrischen Verbrauchers der zweiten Gruppe wird der elektrische Verbraucher nicht zugeschaltet. Bleibt die Anforderung auf Zuschaltung des elektrischen Verbrauchers der zweiten Gruppe weiterhin bestehen, kann dieser erst dann zugeschaltet werden, wenn eine ausreichende Leistungsreserve zur Verfügung steht. Dies kann bspw. dadurch geschehen, dass ein elektrischer Verbraucher der ersten oder zweiten Gruppe abgeschaltet wird und die Leistungsreserve um dessen Verbrauchswert wieder steigt.

Wie bereits angegeben, handelt es sich bei den elektrischen Verbrauchern der ersten Gruppe um solche, die für das Überleben und die Sicherung der Windenergieanlage zwingend notwendig sind. Erfindungsgemäß ist vorgesehen, dass diese elektrischen Verbraucher auf Anforderung grundsätzlich zugeschaltet werden. Ist bei der Zuschaltung eines elektrischen Verbrauchers der ersten Gruppe die Leistungsreserve kleiner als der Verbrauchswert dieses Verbrauchers oder wird nach Zuschaltung festgestellt, dass der Ist-Verbrauch größer ist als der Verbrauchsmaximalwert, werden bevorzugt ein oder mehrere elektrische Verbraucher der zweiten Gruppe abgeschaltet, um so ausreichend Leistung für den Betrieb der angeforderten elektrischen Verbraucher der ersten Gruppe zur Verfügung zu stellen. Es erfolgt also eine Priorisierung, wonach die elektrischen Verbraucher der ersten Gruppe grundsätzlich immer auf Anforderung zugeschaltet werden, während die Verbraucher der zweiten Gruppe nur zugeschaltet werden, wenn mit allen auf Anforderung zugeschalteten elektrischen Verbraucher der ersten Gruppe noch ausreichend Leistungsreserve zur Verfügung steht.

Bevorzugt ist es, wenn der Windpark einen Parkmaster umfasst. Bei einem Parkmaster handelt es sich um eine zentrale Regelungseinheit, die z.B. auf der zentralen Plattform eines Offshore-Windparks angeordnet sein kann. Der Parkmaster ist mit den Betriebsführungseinheiten der einzelnen Windenergieanlagen des Windparks über Datenleitungen verbunden, so dass zwischen Parkmaster und Betriebsführungseinheiten Daten ausgetauscht werden können. Es ist bevorzugt, wenn der Parkmaster den Verbrauchsmaximalwert für die einzelnen Windenergieanlagen bestimmt und den jeweiligen Betriebsführungseinheiten der Windenergieanlagen übermittelt.

Der Verbrauchsmaximalwert kann aus einem Vorgabewert der maximalen Leistung der Netzersatzversorgungseinheit, der Anzahl der Windenergieanlagen im Windpark und ggf. einer Vorbelastung bestimmt werden. Der Vorgabewert der maximalen Leistung der Netzersatzversorgungseinheit stellt die maximal von der Netzersatzversorgungseinheit erzeugbare Leistung dar. Unter Vorbelastung sind all jene Faktoren zusammengefasst, welche die maximal bei den Windenergieanlagen verfügbare Leistung mindern. Die Vorbelastung kann also Verlustleistungen, z.B. aufgrund von Leitungswiderständen, umfassen. Auch der Eigenbedarf des Parkmasters oder sonstiger Vorrichtungen des Windparks können durch die Vorbelastung berücksichtigt werden. Der Verbrauchsmaximalwert für eine einzelne Windenergieanlage lässt sich im einfachsten Fall bspw. aus der Differenz zwischen Vorgabewert der maximalen Leistung der Netzersatzversorgungseinheit und Vorbelastung, geteilt durch die Anzahl der Windenergieanlagen im Windpark berechnen. Der Verbrauchsmaximalwert kann für alle Windenergieanlagen gleich oder aber individuell sein.

Weiter bevorzugt ist es, wenn die Betriebsführungseinheiten der einzelnen Windenergieanlagen den Ist-Verbrauch und Anforderungen zur Zuschaltung von elektrischen Verbrauchern an den Parkmaster übermitteln. Sind bei dem Parkmaster die Verbrauchswerte der elektrischen Verbraucher hinterlegt oder werden diese zusammen mit der Anforderung von der Betriebsführungseinheit übermittelt, kann der Parkmaster aufgrund dieser Informationen die Verbrauchsmaximalwerte einer oder mehrerer Windenergieanlagen erhöhen, wobei er gleichzeitig die Verbrauchsmaximalwerte einer oder mehrerer Windenergieanlagen entsprechen verringert. Es können so ungenutzte Leistungsreserven einer oder mehrerer Windenergieanlagen auf andere Windenergieanlagen verteilt werden, deren Leistungsreserve nicht ausreicht, alle angeforderten elektrischen Verbraucher - insbesondere solche der zweiten Gruppe - zu betreiben. Es ist dabei insbesondere möglich, dass der Parkmaster bei der Umverteilung der Leistungsreserven berücksichtigt, dass einzelne Prozesse der Betriebsführungseinheit einer Windenergieanlage, für die auch Komponenten der zweiten Gruppe zugeschaltet werden müssen, abgeschlossen sind, bevor der Verbrauchsmaximalwert für diese Windenergieanlage so stark verringert wird, dass die Komponenten der zweiten Gruppe abgeschaltet werden müssten. Ist bspw. die Pitchverstelleinrichtung einer Windenergieanlage der zweiten Gruppe zugeordnet, kann so sichergestellt werden, dass eine Pitchverstellung bei einer Windenergieanlage zunächst abgeschlossen wird, bevor der Verbrauchsmaximalwert dieser Windenergieanlage so stark verringert wird, dass die Pitchverstellung abgeschaltet werden müsste und die Pitchverstellung somit nicht abgeschlossen werden könnte. Wichtig ist in diesem Zusammenhang, dass der Parkmaster zu jedem Zeitpunkt dafür sorgt, dass bei allen Windenergieanlagen des Windparks immer genug Leistungsreserve zur Verfügung steht, damit alle angeforderten elektrischen Verbraucher der ersten Gruppe betrieben werden können. Die Summe der Verbrauchsmaximalwerte aller Windenenergieanlagen bleibt konstant. Erfindungsgemäß werden die Betriebsparameter einer Windenergieanlage im Netzausfallmodus verändert. So werden dabei die Sollwerte für die Temperatur in einer Gondel verändert, die zwar ein Überleben der Windenergieanlage sichern, zu deren Aufrechterhaltung jedoch weniger Energie benötigt wird, als für die Solltemperatur im Normalbetriebsmodus der Windenergieanlage. Durch eine veränderte Solltemperatur müssen dann Heizungen oder Kühlsysteme, wie Lüfter etc., seltener betrieben werden, was den Energieverbrauch senkt. Sobald der Netzausfall behoben ist, können die Heizungen oder Kühlsysteme dann wieder normal betrieben werden, so dass die Solltemperatur im Normalbetriebsmodus erreicht wird.

Weiter bevorzugt ist es, wenn wenigstens eine der Windenergieanlagen im Netzausfallmodus weiterbetrieben wird. Diese Windenergieanlage(n) kann dann Leistung in das windparkinterne Netz einspeisen und die Netzersatzversorgungseinheit so entlasten. In der Folge reduziert sich die von der Netzersatzversorgungseinheit zu generierende Leistung und - im Falle von kraftstoffbetriebenen Notstromaggregaten - der Kraftstoffverbrauch.
Es ist weiter bevorzugt, eine dritte Gruppe von elektrischen Verbrauchern vorzusehen, wobei die Betriebsführungseinheit im Netzausfallmodus die elektrischen Verbraucher der dritten Gruppe abschaltet. Die Verbraucher der dritten Gruppe sind für das Überleben und die Sicherheit einer Windenergieanlagen nicht erforderlich. Sie können daher im Netzausfallmodus ohne Weiteres abgeschaltet werden und verbrauchen folglich auch keine elektrische Energie. Erst wenn die Betriebsführungseinheit den Netzausfallmodus wieder verlassen und folglich im Normalbetrieb arbeitet, werden die elektrischen Verbraucher der dritten Gruppe (ggf. auf Anforderung) wieder zugeschaltet.

Der erfindungsgemäße Windpark ist zum Betrieb gemäß dem erfindungsgemäßen Verfahren ausgebildet. Es wird daher auf die vorstehenden Erläuterungen verwiesen.

Die Netzersatzversorgungseinheit kann über getrennte Leitungen mit den einzelnen Windenergieanlagen und deren elektrischen Verbrauchern verbunden sein. Bevorzugt ist es jedoch, wenn die Netzersatzversorgungseinheit über das windparkinterne Netz mit wenigstens einem Teil der elektrischen Verbraucher der Windenergieanlagen verbunden ist. Die von der Netzersatzversorgungseinheit erzeugte Leistung wird dann in das windparkinterne Netz eingespeist und gelangt darüber zu den elektrischen Verbrauchern der Windenergieanlagen.

Bevorzugt sind zur Zu- und Abschaltung der einzelnen elektrischen Verbraucher einer Windenergieanlage ein oder mehrere Leistungsschütze vorgesehen. Es ist besonders bevorzugt, wenn mehrere elektrische Verbraucher, bspw. die der dritten Gruppe, über eine Sammelschiene angeschlossen sind. Das Zu- und Abschalten dieser elektrischen Verbraucher kann dann über ein einzelnes, an der Sammelschiene angeordnetes Leistungsschütz erfolgen.

Die Erfindung wird nun anhand vorteilhafter Ausführungsformen unter Bezugnahme auf die beigefügten Zeichnungen beispielhaft beschrieben. Es zeigen:
- Fig.1:: einen erfindungsgemäßen Windpark; und
- Fig.2:: eine Windenergieanlage des Windparks aus Figur 1;
- Fig.3a,b:: symbolische Darstellung zweier alternativer Berechnungsmöglichkeiten für den Verbrauchsmaximalwert; und
- Fig.4:: symbolische Darstellung der Berechnung der Leistungsreserve.

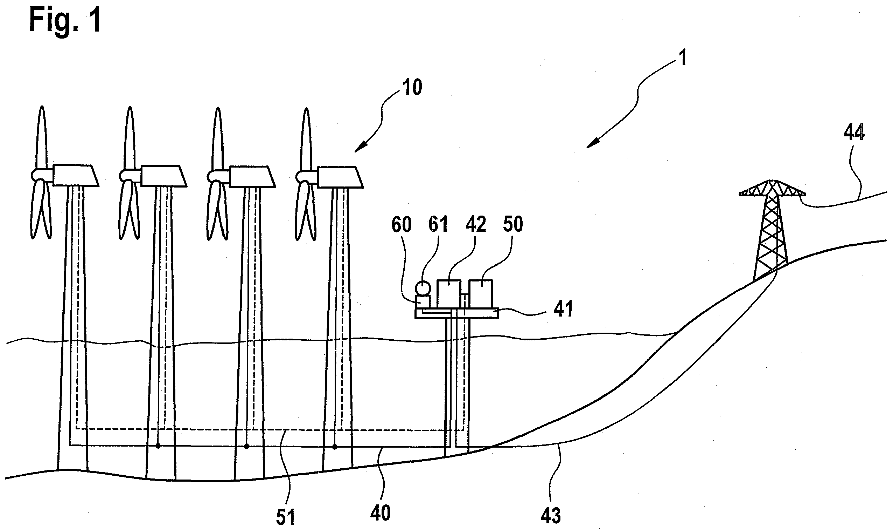

In Figur 1 ist ein erfindungsgemäßer Windpark 1 dargestellt, der mit dem erfindungsgemäßen Verfahren betrieben wird. Bei dem Windpark 1 in Figur 1 handelt es sich um einen Offshore-Windpark, d.h. um einen Windpark 1 der auf offener See vor einer Küste errichtet wurde.

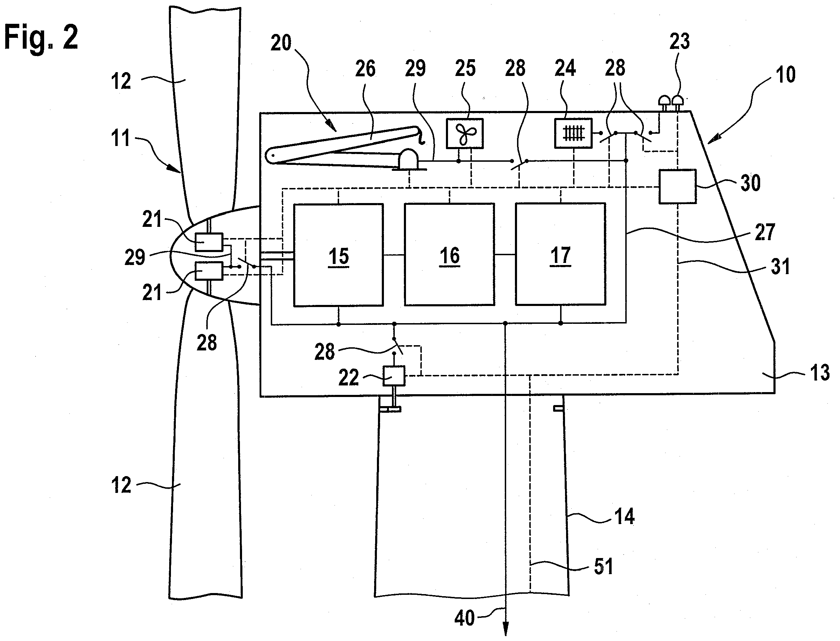

Der Windpark 1 umfasst dabei mehrere Windenergieanlagen 10, von denen exemplarisch eine Windenergieanlage 10 in Figur 2 detailliert dargestellt ist. Eine Windenergieanlage 10 umfasst einen Rotor 11 mit Rotorblättern 12, der drehbar an einer Gondel 13 an der Spitze eines Turms 14 angeordnet ist. Der Rotor 11 treibt einen Generator 15 an, bei dem es sich vorzugsweise um einen doppelt gespeisten Asynchrongenerator handelt. Mit dem Generator 15 ist ein Umrichter 16 verbunden. Weiterhin ist ein Transformator 17 vorgesehen, der die vom Umrichter 16 ausgegebene Spannung transformiert. Die Windenergieanlage 10 ist über den Transformator 17 so mit einem windparkinternen Netz 40 verbunden, dass die von der Windenergieanlage 10 erzeugte Leistung in das windparkinterne Netz 40 eingespeist wird.

Außerdem sind an der Windenergieanlage 10 noch eine Pitchverstelleinheit 21 mit einer Antriebseinheit für die PitchVerstellung der einzelnen Rotorblätter 12, Stellmotoren 22, mit denen die Gondel 12 gegenüber den Turm 13 in Azimutrichtung verschwenkt werden kann, eine Flughindernisbefeuerung 23, Heizelemente 24, Lüfter 25 und ein Bordkran 26 vorgesehen. Bei diesen genannten Komponenten handelt es sich ausschließlich um elektrische Verbraucher 20. Die elektrischen Verbraucher sind über Anschlussleitungen 27 mit dem windparkinternen Netz 40 verbunden und können von dort die für ihren Betrieb notwendige Energie beziehen. An einzelnen Anschlussleitungen 27 sind zwischen den jeweiligen elektrischen Verbrauchern 20 und dem Windparkinternen Netz 40 sind Leistungsschütze 28 vorgesehen, mit denen die Energiezufuhr aus dem windparkinternen Netz 40 zu einem elektrischen Verbraucher 20 unterbrochen werden kann. Einige der elektrischen Verbraucher 20 sind über eine Sammelschiene 29 elektrisch miteinander verbunden, wobei die Sammelschiene 29 wiederum über eine Anschlussleistung 27 umfassend ein Leistungsschütz 28 mit dem windparkinternen Netz 40 verbunden ist.

Der Betrieb der Windenergieanlage 10 ist kontrolliert von einer Betriebsführungseinheit 30. Sie wirkt über Steuerleitungen 31 auf die einzelnen Komponenten 15-17, 20 der Windenergieanlage 10 ein. Außerdem ist die Betriebsführungseinheit 30 mit den Leistungsschützen 28 verbunden und kann diese schalten.

Ebenfalls an das windparkinterne Netz 40 angeschlossen ist eine auf einer zentralen Plattform 41 angeordnete Übergabestation 42. An dieser Übergabestation 42 wird die von den Windenergieanlagen 10 erzeugte elektrische Leistung aus dem windparkinternen Netz 40 über ein Netzanschlusskabel 43 in ein externes Versorgungsnetz 44 übergeben. Bei dem windparkinternen Netz 40 handelt es sich um ein Mittelspannungsnetz, während das Versorgungsnetz 44 ein Hochspannungsnetz ist. Um die Leistung von dem windparkinternen Netz 40 in das Versorgungsnetz 43 einspeisen zu können, umfasst die Übergabestation 42 einen Transformator (nicht dargestellt). Es ist auch möglich, dass die Übergabestation 42 und/oder der vorgenannte Transformator nicht offshore auf der zentralen Plattform 41, sondern an Land angeordnet ist. Im letzteren Fall erstreckt sich das windparkinterne Netz über das Netzanschlusskabel 43 bis ans Land.

Auf der zentralen Plattform 41 weiterhin angeordnet ist ein Parkmaster 50, der über Datenleitungen 51 mit der Übergabestation 42 und den Betriebsführungseinheiten 30 der einzelnen Windenergieanlagen 10 verbunden ist. Außerdem findet sich auf der zentralen Plattform 41 noch eine Netzersatzversorgungseinheit 60 in Form eines kraftstoffbetriebenen Notstromaggregates mit einem dazugehörigen Kraftstofftank 61.

Der Parkmaster 50 und die Betriebsführungseinheiten 30 steuern die Windenergieanlagen 10 im störungsfreien Fall auf bekannte Art und Weise. Die Betriebsführungseinheiten 30 des erfindungsgemäßen Windparks 1 weisen darüber hinaus einen Netzausfallmodus auf. Dieser Modus wird aktiviert, wenn es aufgrund einer Störung nicht möglich ist, Leistung vom windparkinternen Netz 40 in das Versorgungsnetz 44 einzuspeisen. Mögliche Quellen für eine solche Störung sind ein Zusammenbruch des Versorgungsnetzes 44, Ausfall der Übergabestation 42 und/oder des Transformators, oder Beschädigungen am Netzanschlusskabel 43. Entsprechende Störungen werden unter dem Oberbegriff "Netzausfall" zusammengefasst. Ein Netzausfall kann von den Betriebsführungseinheiten 30 selbst festgestellt werden. Es ist aber auch möglich, dass der Parkmaster 50 zum Erkennen von Netzausfällen ausgebildet ist und Netzausfälle über die Datenleitungen 51 an die Betriebsführungseinheiten 30 meldet.

Wird ein Netzausfall festgestellt, werden die Windenergieanlagen 10 heruntergefahren, d.h. die Betriebsführungseinheiten 30 steuern die einzelnen Komponenten so an, dass die Windenergieanlagen 10 innerhalb kürzester Zeit keine Leistung mehr in das windparkinterne Netz 40 einspeisen.

Damit die über die Anschlussleitungen 27 mit dem windparkinternen Netz 40 verbundenen elektrischen Verbraucher 20 weiterhin mit Energie versorgt werden können, wird bei Netzausfall die Netzersatzversorgungseinheit 60 eingeschaltet, die dann die einzige Energiequelle im windparkinternen Netz 40 darstellt. Netzersatzversorgungseinheit 60 speist die elektrische Leistung in das windparkinterne Netz 40 ein, die zum Betrieb von elektrischen Verbraucher 20 notwendig ist. Die Netzersatzversorgungseinheit 60 kann durch den Parkmaster 50, Betriebsführungseinheiten 30 oder eine gesonderte Vorrichtung zum Detektieren von Netzausfällen eingeschaltet werden.

Für den Netzausfallmodus sind die elektrischen Verbraucher 20 einer Windenergieanlage in drei Gruppen eingeteilt. Die elektrischen Verbraucher der ersten Gruppe sind für das Überleben und die Sicherheit der Windenergieanlage 10 zwingend notwendig. Im dargestellten Ausführungsbeispiel gehören zur ersten Gruppe die Stellmotoren 22 zur Azimutverstellung sowie die Flughindernisbefeuerung 23. Die Stellmotoren 22 zur Azimutverstellung sind für das Überleben der Windenergieanlage 10 erforderlich, um den Rotor 11 aus dem Wind drehen zu können. So kann gewährleistet werden, dass die Windenergieanlage 10 nicht durch Wind beschädigt wird. Die Flughindernisbefeuerung 23 dient der Sicherheit der Windenergieanlage 10.

Der zweiten Gruppe sind solche elektrischen Verbraucher 10 zugeordnet, die auch während eines Netzausfalls benötigt werden können, ohne dass von Ihnen die Sicherheit oder das Überleben der Windenergieanlage abhängen würde. Im dargestellten Ausführungsbeispiel bilden die Heizelemente 24 und die Pitchverstelleinheiten 21 die elektrischen Verbraucher 20 der zweiten Gruppe.

Zur dritten Gruppe gehören solche elektrischen Verbraucher 20, die während eines Netzausfalls nicht benötigt werden. Dazu gehören im dargestellten Ausführungsbeispiel die Lüfter 25 und der Bordkran 26.

Bei einem Netzausfall steht für den Betrieb der elektrischen Verbraucher 20 nur die von der Netzersatzversorgungseinheit 60 erzeugt Leistung zur Verfügung. Im Netzausfallmodus werden die elektrischen Verbraucher 20 erfindungsgemäß so zu- und abgeschaltet, dass zumindest für den Betrieb der elektrischen Verbraucher 20 der ersten Gruppe immer ausreichend elektrische Leistung zur Verfügung steht.

Dazu wird von dem Parkmaster 50 zunächst ein Verbrauchsmaximalwert 90 berechnet. Der Verbrauchsmaximalwert 90 gibt an, wie viel elektrische Leistung für die einzelnen Windenergieanlagen 10 bei einem Netzausfall zur Verfügung steht.

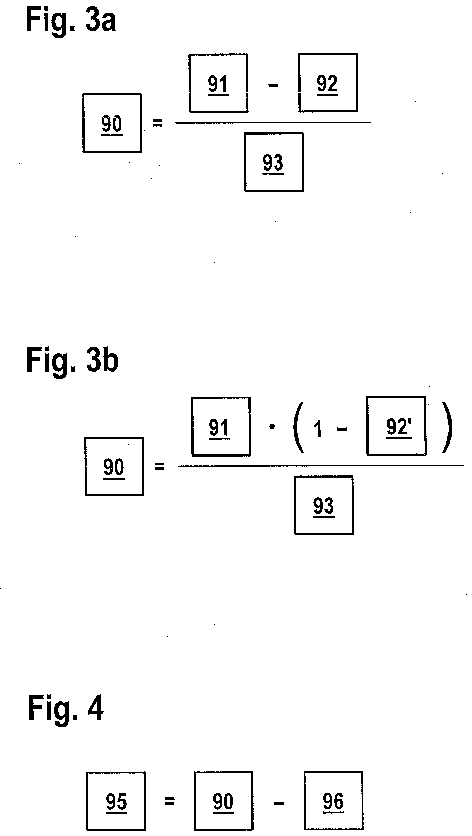

Der Verbrauchsmaximalwert 90 kann im Augenblick des Netzausfalls oder in regelmäßigen Abständen bei Normalbetrieb berechnet und ggf. im Parkmaster 50 abgespeichert werden. Der Verbrauchsmaximalwert 90 errechnet sich aus der maximalen Leistung 91 der Netzersatzversorgungseinheit 60. Dieser Wert 91 kann beim Parkmaster 50 hinterlegt sein, oder wird diesem von der Netzersatzversorgungseinheit 60 über eine Datenleitung (nicht dargestellt) übermittelt. Weiterhin ist beim Parkmaster 50 ein Wert für eine Vorbelastung 92 hinterlegt. Dieser Vorbelastungswert 92 bildet u.a. die Verluste ab, die bei dem Transport der von der Netzersatzversorgungseinheit 60 erzeugten Leistung über das windparkinterne Netz 40 an die Windenergieanlagen 10 entstehen, bspw. Verluste aufgrund von Kabelwiderständen. Auch der Energiebedarf des Parkmasters 50 fließt in die Vorbelastung 92 ein. Über die Vorbelastung 92 wird angegeben, wie viel von der von der Netzersatzversorgungseinheit 60 erzeugten Leistung bei den Windenergieanlagen 10 zum Betrieb der elektrischen Verbraucher 20 tatsächlich zur Verfügung steht. Die Vorbelastung 92 kann in absoluten Zahlen angegeben werden, wobei sie dann von der maximalen Leistung 91 der Netzersatzversorgungseinheit 60 abgezogen wird (vgl. Fig. 3a). Es ist aber auch möglich, dass die Vorbelastung 92 als relativer Faktor 92' angegeben ist, wobei dieser oder ein daraus abgeleiteter Wert dann mit der maximalen Leistung 91 der Netzersatzversorgungseinheit 60 multipliziert werden kann (vgl. Fig. 3b).

Anschließend wird der aus maximaler Leistung 91 der Netzersatzversorgungseinheit 60 und Vorbelastung 92 berechnete Wert durch die Anzahl 93 der Windenergieanlagen 10 geteilt. Dabei kann die Anzahl 93 die gesamt im Windpark 1 vorhandenen Windenergieanlagen 10 widerspiegeln. Es ist aber auch möglich, dass lediglich die wirksam mit dem windparkinternen Netz 40 verbundenen Windenergieanlagen 10 berücksichtigt werden. Ist eine Windenergieanlange 10 aus betriebstechnischen Gründen von dem windparkinternen Netz 40 getrennt, können ihre elektrischen Verbraucher 20 auch keine Energie aus dem windparkinternen Netz 40 beziehen und müssen demnach auch bei der Berechnung des Verbrauchmaximalwertes 90 nicht berücksichtig werden.

Es ist auch möglich, dass für jede Windenergieanlage ein individueller Verbrauchsmaximalwert 90 berechnet wird. So kann berücksichtigt werden, dass die Leistungsanforderungen einzelnen nicht-baugleicher Windenergieanlagen 10 bei Netzausfall unterschiedlich sein können. Die Summe der Verbrauchsmaximalwerte 90 darf dabei die maximale Leistung 91 der Netzersatzversorgungseinheit 60 jedoch nicht überschreiten.

Der Parkmaster 50 übermittelt den oder die Verbrauchsmaximalwerte 90 über die Datenleitungen 51 an die Betriebsführungseinheiten 30 der einzelnen Windenergieanlagen 10.

Bei einem Netzausfall schaltet die Betriebsführungseinheit 30 einer Windenergieanlage 10 zunächst die elektrischen Verbraucher 20 der dritten Gruppe über Leistungsschütze 28 ab. Mehrere elektrische Verbraucher 20 können über eine Sammelschiene 29 verbunden sein, so dass zum Abschalten aller mit der Sammelschiene 29 verbundenen elektrischen Verbraucher 20 über ein einzelnes Leistungsschütz 28, welches zwischen Sammelschiene 29 und Anschlussleistung 27 angeordnet ist, abgeschaltet werden. Im dargestellten Ausführungsbeispiel sind Lüfter 25 und Bordkran 26 an einer Sammelschiene 29 angeschlossen. Aufgrund der Sammelschiene 29 ist ein einziges Leistungsschütz 28 ausreichend, um die elektrischen Verbraucher 20 der dritten Gruppe abzuschalten.

Indem die elektrischen Verbraucher 20 der dritten Gruppe bei einem Netzausfall grundsätzlich abgeschaltet werden, verbrauchen diese auch keine elektrische Energie.

Die elektrischen Verbraucher 20 der ersten Gruppe werden von der Betriebsführungseinheit 30 auf Anforderung grundsätzlich zugeschaltet, da es sich bei ihnen um für die Sicherheit und das Überleben der Windenergieanlage 10 zwingend notwendige elektrische Verbraucher 20 handelt. Bei den elektrischen Verbrauchern 20 der ersten Gruppe handelt es sich jedoch nicht ausschließlich um solche, die ständig zugeschaltet sein müssen. Vielmehr können zur ersten Gruppe auch solche gehören, die auf Anforderung - d.h. wenn sie tatsächlich benötigt werden - zugeschaltet werden. Im dargestellten Ausführungsbeispiel gehören die die Stellmotoren 22 für die Azimutverstellung und die Flughindernisbefeuerung 23 zur ersten Gruppe. Jedoch ist nur für die Flughindernisbefeuerung 23 erforderlich, dass sie grundsätzlich und dauerhaft mit Energie versorgt wird, d.h. zugeschaltet ist. Bei solchen elektrischen Verbrauchern 20, die auch bei Netzausfall immer zugeschaltet sein müssen, kann ggf. sogar auf ein Leistungsschütz 28 zum Abschalten verzichtet werden. Die die Stellmotoren 22 für die Azimutverstellung müssen nur zugeschaltet werden, wenn tatsächliche der Azimutwinkel der Gondel 13 und damit des Rotors 11 verstellt werden muss. Die übrige Zeit können diese elektrischen Verbraucher 20 abgeschaltet sein.

Der Verbrauchsmaximalwert 90 für eine Windenergieanlage 10 bzw. die dadurch bezifferte maximal verfügbare Leistung ist ausreichend, um alle elektrischen Verbraucher 20 der ersten Gruppe bei einem Netzausfall betreiben zu können

Die elektrischen Verbraucher 20, die nicht zur ersten oder dritten Gruppe gehören, finden sich in der zweiten Gruppe wieder. Diese Gruppe umfasst alle elektrischen Verbraucher, der für die Sicherheit und das Überleben der Windenergieanlage 10 zwar nicht zwingend notwendig sind, die aber dennoch benötigt werden, um bspw. Beschädigungen oder sonstige Verschlechterungen einzelner Komponenten der Windenergieanlage 10 zu vermeiden. Im dargestellten Ausführungsbeispiel gehört zur zweiten Gruppe ein Heizelement 24, mit dem Eisbildung in der Gondel 13 verhindert werden kann, ebenso wie die Pitchverstelleinheiten 21. Da die Pitchverstelleinheiten 21 für die einzelnen Rotorblätter in der Regel immer gleichzeitig betrieben werden, sind sie über eine Sammelschiene 29 verbunden. Dadurch ist bereits ein Leistungsschütz 28 zur Zu- und Abschaltung aller Pitchverstelleinheiten 21 ausreichend.

Die elektrischen Verbraucher 20 der zweiten Gruppe werden nur dann zugeschaltet, wenn eine ausreichende Leistungsreserve 95 zur Verfügung steht, d.h. wenn ausreichend Leistung der Netzersatzversorgungseinheit 60 zur Verfügung steht, um einen elektrischen Verbraucher 20 zu betreiben. Dazu wird von der Betriebsführungseinheit die Leistungsreserve 95 berechnet, die sich aus der Differenz zwischen Verbrauchmaximalwert 90 und Ist-Verbrauch 96 der zugeschalteten elektrischen Verbraucher 20 einer Windenergieanlage 10 ergibt (vgl. Fig. 4). Der Ist-Verbrauch 96 kann dabei über ein entsprechend ausgestaltetes Messgerät (bspw. ein Leistungsmessgerät) festgestellt werden. Alternativ ist es möglich, dass in der Betriebsführungseinheit 30 Werte für die Leistungsaufnahme der einzelnen elektrischen Verbraucher 20 hinterlegt sind. Die Betriebsführungseinheit kann dann den Ist-Verbrauch 96 aus der Summe der Werte für die Leistungsaufnahme aller zugeschalteten elektrischen Verbraucher 20 berechnen.

Die Betriebsführungseinheit 30 im Netzausfallmodus schaltet einen elektrischen Verbraucher 20 der zweiten Gruppe nur dann zu, wenn die Leistungsreserve 95 größer ist als der in der Betriebseinheit 30 hinterlegte Wert für die Leistungsaufnahme eben dieses elektrischen Verbrauchers 20. So wird sichergestellt, dass bei einer Windenergieanlage 10 nicht mehr Leistung durch elektrische Verbraucher 20 verbraucht wird, als für die Windenergieanlage bei Netzausfall zur Verfügung steht.

Ein elektrischer Verbraucher 20 der ersten Gruppe wird auf Anforderung grundsätzlich zugeschaltet (bspw. die Stellmotoren 22 für die Azimutverstellung). Sofern festgestellt wird, dass für das Betreiben des angeforderten elektrischen Verbrauchers 20 nicht mehr ausreichend Leistung zur Verfügung steht, werden ein oder mehrere elektrische Verbraucher 20 der zweiten Gruppe abgeschaltet, so dass ausreichen Leistung für den Betrieb des elektrischen Verbrauchers 20 der ersten Gruppe vorhanden ist. Die mangelnde Leistung für das Betreiben eines elektrischen Verbrauchers 20 der ersten Gruppe kann dadurch festgestellt werden, dass nach seiner Zuschaltung der gemessene oder berechnete Ist-Verbrauch 96 größer ist als der Verbrauchsmaximalwert 90, woraufhin dann ein oder mehrere elektrische Verbraucher 20 der zweiten Gruppe abgeschaltet werden. Alternativ ist es möglich, dass die berechnete Leistungsreserve 95 mit dem in der Betriebsführungseinheit 30 hinterlegten Wert für die Leistungsaufnahme des elektrischen Verbrauchers 20 der ersten Gruppe verglichen wird, und solange elektrische Verbraucher 20 der zweiten Gruppe abgeschaltet werden, bis die Leistungsreserve 95 größer ist als der Wert für die Leistungsaufnahme des elektrischen Verbrauchers 20 der ersten Gruppe.

Durch die Einteilung der elektrischen Verbraucher 30 in verschiedene Gruppen wird eine Priorisierung vorgenommen. Elektrische Verbraucher 20, die für die Sicherheit und das Überleben der Windenergieanlage 10 zwingend erforderlich sind, werden auf Anforderung grundsätzlich zugeschaltet. Elektrische Verbraucher 20, die nicht zwingend erforderlich sind, werden nur dann zugeschaltet, wenn ausreichend Leistungsreserve 95 zur Verfügung steht. Insbesondere werden die elektrischen Verbraucher 20 der zweiten Gruppe abgeschaltet, wenn nicht ausreichend Leistung zum Betrieb aller angeforderten elektrischen Verbraucher 20 der ersten Gruppe zur Verfügung steht. Die elektrischen Verbraucher 20 der dritten Gruppe werden nicht benötigt und daher bei Netzausfall grundsätzlich abgeschaltet, um Energie zu sparen.

Weiterhin ist vorgesehen, dass die Betriebsführungseinheiten 7 über die Datenleitungen 51 die Anforderungen von elektrischen Verbrauchern 20 (ggf. in Zusammenhang mit dem Wert für den Leistungsbedarf der angeforderten elektrischen Verbraucher 20) und die Leistungsreserve 95 an den Parkmaster 50 übermittelt. Der Parkmaster 50 kann auf Basis dieser Werte von wenigstens einem Teil der Windenergieanlagen 10 die Verbrauchsmaximalwerte 90 einzelner Windenergieanlagen 10 kurzzeitig absenken und gleichzeitig die Verbrauchsmaximalwerte 90 anderer Windenergieanlagen erhöhen. So ist es möglich, dass bei einer Windenergieanlage 10, deren Leistungsreserve 95 nicht vollständig ausgeschöpft wird, die Leistungsreserve 95 verringert wird. Die von einer entsprechenden Windenergieanlage 10 abgezogene Leistungsreserve 95 kann einer anderen Windenergieanlage 10 zugeschlagen werden, deren eigene Leistungsreserve 95 nicht zum Betrieb aller angeforderten elektrischen Verbraucher 20 - darunter auch solche der zweiten Gruppe - ausreichen würde. Wird bei einer Windenergieanlage 10, deren Leistungsreserve 95 wie beschrieben reduziert wurde, ein elektrischer Verbraucher 20 der ersten Gruppe angefordert, so wird die beschriebene Übertragung von Leistungsreserve 95 rückgängig gemacht. Auf diese Weise ist sichergestellt, dass bei jeder Windenergieanlage 10 immer ausreichend Leistung zur Verfügung steht, um wenigstens alle angeforderten Verbraucher 20 der ersten Gruppe zu betreiben.
Im Netzausfallmodus kann die Betriebsführungseinheit 30 weiterhin Betriebsparameter der Windenergieanlage 10 ändern. Bspw. ist es möglich, dass die Minimaltemperatur in der Gondel 13 gegenüber dem Normalbetriebsmodus abgesenkt wird. Das hat zu Folge, dass weniger Energie durch das Heizelement 26 verbraucht wird. Da die Windenergieanlage 10 im Netzausfallmodus nicht betrieben wird, d.h. der Generator 15 nicht durch den Rotor 11 angetrieben wird, kann eine geringere Minimaltemperatur gewählt werden, ohne dass Beschädigungen zu erwarten wären.

Weiterhin ist es möglich, dass eine der Windenergieanlagen 10 während eines Netzausfalls weiterbetrieben wird, so dass die Windenergieanlage 10 Leistung in das windparkinterne Netz 40 einspeist. Die von der Netzersatzversorgungseinheit 60 aufzubringende Leistung reduziert sich dann um die von dieser Windenergieanlage 10 erzeugte Leistung. Dadurch reduziert sich auch der Kraftstoffverbrauch der Netzersatzversorgungseinheit 60.

## Patentansprüche

1. Verfahren zum Betreiben eines Windparks (1) mit mehreren, an ein windparkinternes Netz (40) angeschlossenen Windenergieanlagen (10) mit jeweils einer Betriebsführungseinheit (30) und weiteren Komponenten umfassend elektrische Verbraucher (20), und einer mit wenigstens einem Teil der elektrischen Verbraucher (20) der Windenergieanlagen (10) verbundene Netzersatzversorgungseinheit (60), wobei die elektrischen Verbraucher (20) jeder Windenergieanlage (10) in wenigstens zwei Gruppen eingeteilt sind, wobei zumindest die Verbrauchswerte der elektrischen Verbraucher (20) einer zweiten Gruppe in der Betriebsführungseinheit (30) der jeweiligen Windenergieanlage (10) hinterlegt sind, die elektrischen Verbraucher (20) von der Betriebsführungseinheit (30) der jeweiligen Windenergieanlage (10) auf Anforderung zu- und abschaltbar sind, wobei die Betriebsführungseinheit (30) einen Netzausfallmodus aufweist, bei dem aus einem Verbrauchsmaximalwert (90) und dem Ist-Verbrauch (96) der zugeschalteten elektrischen Verbraucher (20) eine Leistungsreserve (95) berechnet wird, die Betriebsführungseinheit (30) einen elektrischen Verbraucher (20) einer ersten Gruppe auf Anforderung zuschaltet und einen elektrischen Verbraucher (20) der zweiten Gruppe auf Anforderung und bei einer Leistungsreserve (95) größer gleich dem Verbrauchswert des angeforderten elektrischen Verbrauchers (20) zuschaltet, und wobei die Betriebsparameter einer Windenergieanlage (10) im Netzausfallmodus verändert werden, **dadurch gekennzeichnet, dass** die Sollwerte für die Temperatur in der Gondel der Windenergieanlage (10) derart verändert werden, dass zu deren Aufrechterhaltung weniger Energie benötigt wird als für die Solltemperatur im Normalbetriebsmodus der Windenergie- - anlage (10).

2. Verfahren nach Anspruch 1, **dadurch gekennzeichnet, dass**
bei einem in der Betriebsführungseinheit (30) für einen angeforderten elektrischen Verbraucher (20) der ersten Gruppe hinterlegten Verbrauchswert größer als der Leistungsreserve, ein oder mehrere elektrische Verbraucher (20) der zweiten Gruppe abgeschaltet werden.

3. Verfahren nach Anspruch 1 oder 2, **dadurch gekennzeichnet, dass**
bei einem Ist-Verbrauch (95) größer als dem Verbrauchsmaximalwert (90) ein oder mehrere elektrische Verbraucher (20) der zweiten Gruppe abgeschaltet werden.

4. Verfahren nach einem der Ansprüche 1 bis 3, **dadurch gekennzeichnet, dass**
ein mit den Betriebsführungseinheiten (30) verbundener Parkmaster (50) vorgesehen ist, der den Betriebsführungseinheiten (30) den Verbrauchsmaximalwert (90) übermittelt.

5. Verfahren nach Anspruch 4, **dadurch gekennzeichnet, dass**
der Verbrauchsmaximalwert (90) aus einem Vorgabewert der maximalen Leistung (91) der Netzersatzversorgungseinheit (60), einer Vorbelastung (92) und der Anzahl (93) der Windenergieanlagen (10) im Windpark (1) berechnet wird.

6. Verfahren nach Anspruch 4 oder 5, **dadurch gekennzeichnet, dass**
die Betriebsführungseinheiten (40) den Ist-Verbrauch (96) und Anforderungen zur Zuschaltung von elektrischen Verbrauchern (20) an den Parkmaster (50) übermitteln und der Parkmaster (50) anhand dieser Informationen den Verbrauchsmaximalwert (90) einer oder mehrerer Windenergieanlage (10) kurzfristig verringert, während gleichzeitig der Verbrauchsmaximalwert (90) einer oder mehrerer Windenergieanlagen (10) erhöht wird.

7. Verfahren nach einem der vorhergehenden Ansprüche,
**dadurch gekennzeichnet, dass**
der Ist-Verbrauch (96) gemessen oder anhand von in der Betriebsführungseinheit (30) hinterlegten Verbrauchswerten für die elektrischen Verbraucher (20) der ersten und zweiten Gruppe berechnet wird.

8. Verfahren nach einem der vorhergehenden Ansprüche,
**dadurch gekennzeichnet, dass**
im Netzausfallmodus wenigstens eine Windenergieanlage (10) weiterbetrieben wird, so dass sie elektrische Leistung in das windparkinterne Netz (40) einspeist.

9. Verfahren nach einem der vorhergehenden Ansprüche,
**dadurch gekennzeichnet, dass**
eine dritte Gruppe von elektrischen Verbrauchern (20) vorgesehen ist, wobei die Betriebsführungseinheit (30) im Netzausfallmodus die elektrischen Verbraucher (20) der dritten Gruppe abschaltet.

10. Windpark (1) umfassend mehrere an ein windparkinternes Netz (40) angeschlossene Windenergieanlagen (10) mit jeweils einer Betriebsführungseinheit (30) und weiteren Komponenten umfassend elektrische Verbraucher (20), und einer mit wenigstens einem Teil der elektrischen Verbraucher (20) der Windenergieanlagen (10) verbundene Netzersatzversorgungseinheit (60), wobei die elektrischen Verbraucher (20) jeder Windenergieanlage (10) in wenigstens zwei Gruppen eingeteilt sind, wobei zumindest die Verbrauchswerte der elektrischen Verbraucher (20) einer zweiten Gruppe in der Betriebsführungseinheit (30) der jeweiligen Windenergieanlage (10) hinterlegt sind, die elektrischen Verbraucher (20) von der Betriebsführungseinheit (30) der jeweiligen Windenergieanlage (10) auf Anforderung zu- und abschaltbar sind, wobei die Betriebsführungseinheit (30) einen Netzausfallmodus aufweist, bei dem aus einem Verbrauchsmaximalwert (90) und dem Ist-Verbrauch (96) der zugeschalteten elektrischen Verbraucher (20) eine Leistungsreserve (95) berechnet wird, die Betriebsführungseinheit (30) einen elektrischen Verbraucher (20) einer ersten Gruppe auf Anforderung zuschaltet und einen elektrischen Verbraucher (20) der zweiten Gruppe auf Anforderung und bei einer Leistungsreserve (95) größer gleich dem Verbrauchswert des angeforderten elektrischen Verbrauchers (20) zuschaltet, und wobei Betriebsführungseinheit (30) die Betriebsparameter einer Windenergieanlage (10) im Netzausfallmodus verändert, **dadurch gekennezeichnet, dass** die Sollwerte für die Temperatur in der Gondel der Windenergieanlage (10) derart verändert werden, dass zu deren Aufrechterhaltung weniger Energie benötigt wird als für die Solltemperatur im Normalbetriebsmodus der Windenergieanlage (10).

11. Windpark (1) nach Anspruch 10, **dadurch gekennzeichnet, dass**
der Windpark zur Durchführung des Verfahrens nach einem der Ansprüche 2 bis 9 ausgebildet ist.

12. Windpark (1) nach Anspruch 10 oder 11, **dadurch gekennzeichnet, dass**
die Netzersatzversorgungseinheit (60) über das windparkinterne Netz (40) mit wenigstens einem Teil der elektrischen Verbraucher (20) verbunden ist.

13. Windpark (1) nach einem der Ansprüche 10 bis 12,
**dadurch gekennzeichnet, dass**
zum Zu- und Abschalten elektrischer Verbraucher (20) ein oder mehrere Leistungsschütze (28) vorgesehen sind.

14. Windpark (1) nach einem der Ansprüche 10 bis 13,
**dadurch gekennzeichnet, dass**
mehrere elektrische Verbraucher (20) über eine Sammelschiene (29) angeschlossen sind.

## Claims

1. Method for operating a wind farm (1) having a plurality of wind energy installations (10) connected to a grid (40) internal to the wind farm, each having an operating control unit (30) and other components comprising electrical consumers (20), and a mains substitute supply unit (60) connected to at least some of the electrical components (20) of the wind energy installations (10), wherein
the electrical consumers (20) of each wind energy installation (10) are divided into at least two groups, where at least the consumption values of the electrical consumers (20) of a second group are stored in the operating control unit (30) of the wind energy installation (10) concerned, the electrical consumers (20) can be switched on and off by the operating control unit (30) of the wind energy installation (10) concerned when requested, wherein the operating control unit (30) has a grid fault mode in which a power reserve (95) is calculated from a maximum consumption value (90) and the actual consumption (96) of the electrical consumers (20) that are switched on, the operating control unit (30) switches an electrical consumer (20) of a first group on when requested and switches an electrical consumer (20) of the second group on when requested and when there is a power reserve (95) greater than or equal to the consumption value of the requested electrical consumer (20), and wherein the operating parameters of a wind energy installation (10) are changed when in grid fault mode, **characterized in that** the setpoint values for the temperature in the nacelle of the wind energy installation (10) are changed such that less energy is required to maintain said setpoint values than for the setpoint temperature in the normal operating mode of the wind energy installation (10).

2. Method according to Claim 1, **characterized in that** when a consumption value stored in the operating control unit (30) for a requested electrical consumer (20) of the first group is greater than the power reserve, one or more electrical consumers (20) of the second group are switched off.

3. Method according to Claim 1 or 2, **characterized in that** when an actual consumption (95) is greater than the maximum consumption value (90), one or more electrical consumers (20) of the second group are switched off.

4. Method according to one of Claims 1 to 3, **characterized in that**
a farm master (50) connected to the operating control units (30) is provided, and transmits the maximum consumption value (90) to the operating control units (30) .

5. Method according to Claim 4, **characterized in that** the maximum consumption value (90) is calculated from a specified value of the maximum power (91) of the mains substitute supply unit (60), a base load (92), and the number (93) of wind energy installations (10) in the wind farm (1).

6. Method according to Claim 4 or 5, **characterized in that** the operating control units (40) transmit the actual consumption (96) and requests for switching on electrical consumers (20) to the farm master (50), and the farm master (50), on the basis of this information, reduces the maximum consumption value (90) of one or more wind energy installations (10) for a short period, while simultaneously the maximum consumption value (90) of one or more wind energy installations (10) is increased.

7. Method according to one of the preceding claims,
**characterized in that**
the actual consumption (96) is measured or is calculated on the basis of consumption values for the electrical consumers (20) of the first and second groups stored in the operating control unit (30).

8. Method according to one of the preceding claims,
**characterized in that**
at least one wind energy installation (10) continues to be operated in grid fault mode, so that it feeds electrical power into the grid (40) internal to the wind farm.

9. Method according to one of the preceding claims,
**characterized in that**
a third group of electrical consumers (20) is provided, where the operating control unit (30) in grid fault mode switches off the electrical consumers (20) of the third group.

10. Wind farm (1) comprising a plurality of wind energy installations (10) connected to a grid (40) internal to the wind farm, each having an operating control unit (30) and other components comprising electrical consumers (20), and a mains substitute supply unit (60) connected to at least some of the electrical components (20) of the wind energy installations (10),
wherein
the electrical consumers (20) of each wind energy installation (10) are divided into at least two groups, where at least the consumption values of the electrical consumers (20) of a second group are stored in the operating control unit (30) of the wind energy installation (10) concerned, the electrical consumers (20) can be switched on and off by the operating control unit (30) of the wind energy installation (10) concerned when requested, wherein the operating control unit (30) has a grid fault mode in which a power reserve (95) is calculated from a maximum consumption value (90) and the actual consumption (96) of the electrical consumers (20) that are switched on, the operating control unit (30) switches an electrical consumer (20) of a first group on when requested and switches an electrical consumer (20) of the second group on when requested and when there is a power reserve (95) greater than or equal to the consumption value of the requested electrical consumer (20), and wherein operating control unit (30) changes the operating parameters of a wind energy installation (10) when in grid fault mode, **characterized in that** the setpoint values for the temperature in the nacelle of the wind energy installation (10) are changed such that less energy is required to maintain said setpoint values than for the setpoint temperature in the normal operating mode of the wind energy installation (10).

11. Wind farm (1) according to Claim 10, **characterized in that**
the wind farm is constructed for carrying out the method according to one of Claims 2 to 9.

12. Wind farm (1) according to Claim 10 or 11, **characterized in that**
the mains substitute supply unit (60) is connected to at least some of the electrical consumers (20) via the grid (40) internal to the wind farm.

13. Wind farm (1) according to one of Claims 10 to 12,
**characterized in that**
one or more power contactors (28) are provided for switching electrical consumers (20) on and off.

14. Wind farm (1) according to one of Claims 10 to 13,
**characterized in that**
a plurality of electrical consumers (20) are connected via a busbar (29).

## Revendications

1. Procédé pour exploiter un parc éolien (1) comprenant plusieurs aérogénérateurs (10) raccordés à un réseau (40) interne au parc éolien, comprenant respectivement une unité de conduite d'exploitation (30) et d'autres composants incluant des consommateurs électriques (20) et une unité d'alimentation de substitution du réseau (60) reliée à au moins une partie des consommateurs électriques (20) des aérogénérateurs (10),
les consommateurs électriques (20) de chaque aérogénérateur (10) étant divisés en au moins deux groupes, au moins les valeurs de consommation des consommateurs électriques (20) d'un deuxième groupe étant stockées dans l'unité de conduite d'exploitation (30) de l'aérogénérateur (10) respectif, les consommateurs électriques (20) pouvant être mis en et hors circuit sur demande par l'unité de conduite d'exploitation (30) de l'aérogénérateur (10) respectif, l'unité de conduite d'exploitation (30) possédant un mode de panne de réseau avec lequel une réserve de puissance (95) est calculée à partir d'une valeur maximale de consommation (90) et de la consommation réelle (96) des consommateurs électriques (20) mis en circuit, l'unité de conduite d'exploitation (30) mettant en circuit un consommateur électrique (20) d'un premier groupe sur demande et mettant en circuit un consommateur électrique (20) du deuxième groupe sur demande et en présence d'une réserve de puissance (95) égale ou supérieure à la valeur de consommation du consommateur électrique (20) demandé, et les paramètres de fonctionnement d'un aérogénérateur (10) étant modifiés dans le mode de panne de réseau, **caractérisé en ce que** les valeurs de consigne pour la température dans la nacelle de l'aérogénérateur (10) sont modifiées de telle sorte que moins d'énergie est nécessaire pour leur maintien que pour la température de consigne dans le mode de fonctionnement normal de l'aérogénérateur (10).

2. Procédé selon la revendication 1, **caractérisé en ce qu'**en présence d'une valeur de consommation stockée dans l'unité de conduite d'exploitation (30) pour un consommateur électrique (20) demandé du premier groupe qui est supérieure à la réserve de puissance, un ou plusieurs consommateurs électriques (20) du deuxième groupe sont mis hors circuit.

3. Procédé selon la revendication 1 ou 2, **caractérisé en ce qu'**en présence d'une consommation réelle (95) supérieure à la valeur maximale de consommation (90), un ou plusieurs consommateurs électriques (20) du deuxième groupe sont mis hors circuit.

4. Procédé selon l'une des revendications 1 à 3, **caractérisé en ce qu'**il existe un maître de parc (50) relié aux unités de conduite d'exploitation (30), lequel communique la valeur maximale de consommation (90) aux unités de conduite d'exploitation (30).

5. Procédé selon la revendication 4, **caractérisé en ce que** la valeur maximale de consommation (90) est calculée à partir d'une valeur prédéfinie de la puissance maximale (91) de l'unité d'alimentation de substitution du réseau (60), d'une charge initiale (92) et du nombre (93) d'aérogénérateurs (10) dans le parc éolien (1).

6. Procédé selon la revendication 4 ou 5, **caractérisé en ce que** les unités de conduite d'exploitation (30) communiquent la consommation réelle (96) et les demandes de mise en circuit de consommateurs électriques (20) au maître de parc (50) et le maître de parc (50), à l'aide de ces informations, réduit brièvement la valeur maximale de consommation (90) d'un ou plusieurs aérogénérateurs (10), pendant que la valeur maximale de consommation (90) d'un ou plusieurs aérogénérateurs (10) est simultanément augmentée.

7. Procédé selon l'une des revendications précédentes, **caractérisé en ce que** la consommation réelle (96) est mesurée ou calculée à l'aide des valeurs de consommation des consommateurs électriques (20) du premier et du deuxième groupe stockées dans l'unité de conduite d'exploitation (30).

8. Procédé selon l'une des revendications précédentes, **caractérisé en ce que** dans le mode de panne de réseau, au moins un aérogénérateur (10) continue de fonctionner, de sorte qu'il injecte de la puissance électrique dans le réseau (40) interne au parc éolien.

9. Procédé selon l'une des revendications précédentes, **caractérisé en ce qu'**il existe un troisième groupe de consommateurs électriques (20), l'unité de conduite d'exploitation (30) mettant les consommateurs électriques (20) du troisième groupe hors circuit dans le mode de panne de réseau.

10. Parc éolien (1) comprenant plusieurs aérogénérateurs (10) raccordés à un réseau (40) interne au parc éolien, comprenant respectivement une unité de conduite d'exploitation (30) et d'autres composants incluant des consommateurs électriques (20) et une unité d'alimentation de substitution du réseau (60) reliée à au moins une partie des consommateurs électriques (20) des aérogénérateurs (10),
les consommateurs électriques (20) de chaque aérogénérateur (10) étant divisés en au moins deux groupes, au moins les valeurs de consommation des consommateurs électriques (20) d'un deuxième groupe étant stockées dans l'unité de conduite d'exploitation (30) de l'aérogénérateur (10) respectif, les consommateurs électriques (20) pouvant être mis en et hors circuit sur demande par l'unité de conduite d'exploitation (30) de l'aérogénérateur (10) respectif, l'unité de conduite d'exploitation (30) possédant un mode de panne de réseau avec lequel une réserve de puissance (95) est calculée à partir d'une valeur maximale de consommation (90) et de la consommation réelle (96) des consommateurs électriques (20) mis en circuit, l'unité de conduite d'exploitation (30) mettant en circuit un consommateur électrique (20) d'un premier groupe sur demande et mettant en circuit un consommateur électrique (20) du deuxième groupe sur demande et en présence d'une réserve de puissance (95) égale ou supérieure à la valeur de consommation du consommateur électrique (20) demandé, et l'unité de conduite d'exploitation (30) modifiant les paramètres de fonctionnement d'un aérogénérateur (10) dans le mode de panne de réseau, **caractérisé en ce que** les valeurs de consigne pour la température dans la nacelle de l'aérogénérateur (10) sont modifiées de telle sorte que moins d'énergie est nécessaire pour leur maintien que pour la température de consigne dans le mode de fonctionnement normal de l'aérogénérateur (10).

11. Parc éolien (1) selon la revendication 10, **caractérisé en ce que** le parc éolien est configuré pour mettre en oeuvre le procédé selon l'une des revendications 2 à 9.

12. Parc éolien (1) selon la revendication 10 ou 11, **caractérisé en ce que** l'unité d'alimentation de substitution du réseau (60) est reliée à au moins une partie des consommateurs électriques (20) par le biais du réseau (40) interne au parc éolien.

13. Parc éolien (1) selon l'une des revendications 10 à 12, **caractérisé en ce qu'**un ou plusieurs contacteurs de puissance (28) sont présents pour la mise en et hors circuit des consommateurs électriques (20).

14. Parc éolien (1) selon l'une des revendications 10 à 13, **caractérisé en ce que** plusieurs consommateurs électriques (20) sont raccordés par le biais d'une barre-bus (29).
